## Europäisches Patentamt

## European Patent Office

## Office européen des brevets

(11) Veröffentlichungsnummer: **0 099 378**
**B1**

(19)

(12) **EUROPÄISCHE PATENTSCHRIFT**

(45) Veröffentlichungstag der Patentschrift:
02.09.87

(51) Int. Cl.⁴: **F 16 G 15/02**

(21) Anmeldenummer: **83900412.4**

(22) Anmeldetag: **20.01.83**

(86) Internationale Anmeldenummer:
**PCT/DE 83/00008**

(87) Internationale Veröffentlichungsnummer:
**WO 83/02653 (04.08.83 Gazette 83/18)**

(54) **KETTENFLACHSCHLOSS.**

(30) Priorität: **22.01.82 DE 3201840**

(43) Veröffentlichungstag der Anmeldung:
**01.02.84 Patentblatt 84/5**

(45) Bekanntmachung des Hinweises auf die Patenterteilung:
**02.09.87 Patentblatt 87/36**

(84) Benannte Vertragsstaaten:
**BE FR**

(56) Entgegenhaltungen:
**DE-A-1 901 367**
**DE-B-1 212 795**
**DE-B-2 108 844**
**DE-B-2 200 381**
**DE-B-2 805 917**
**DE-U-7 406 430**
**US-A-2 353 940**

(73) Patentinhaber: **Becker- Prünte GmbH, August- Becker- Strasse 10, D-4354 Datteln Westfalen (DE)**

(72) Erfinder: **HANNIG, Robert, Ludwig- Uhlandstrasse 6, D-4354 Datteln (DE)**
Erfinder: **RAST, Jürgen, Büscherstr. 65, D-4355 Waltrop (DE)**

(74) Vertreter: **Herrmann- Trentepohl, Werner, Dipl.- Ing., Postfach 1140 Schaeferstrasse 18, D-4690 Herne 1 (DE)**

EP 0 099 378 B1

### Beschreibung

Die Erfindung betrifft ein Kettenflachschloß für Rundgliederketten gemäß dem Oberbegriff des Anspruches 1.

Werden Rundgliederketten über formschlüssige Scheiben geführt, liegen ihre Glieder in Taschen, welche in der Stirnseite der Scheibe ausgespart sind. Diese liegenden Kettenglieder sind durch stehende Kettenglieder miteinander verbunden, deren Ebene demzufolge in der Scheibenebene verläuft. Das erfindungsgemäße Kettenschloß kann in beiden Ebenen den Umlauf einer Rundgliederkette um eine solche Scheibe mitmachen. Es unterscheidet sich darin von Notkettengliedern, mit dem es jedoch gemeinsam hat, daß es eine jederzeit anbringbare oder lösbare Kettenverbindung bildet. Das erfindungsgemäße Kettenschloß unterscheidet sich ferner von anderen Kettenschlössern, die nur in einer Ebene, meistens in einer zur Scheibenebene parallelen Ebene umlaufen können.

Das erfindungsgemäße Kettenschloß ist für die Montage und Demontage unterteilt. Zum Anbringen werden die beiden Hälften in die Endglieder der beiden zu verbindenden Kettenstränge eingeführt und dann in der Ebene des Kettenschlosses bis zum Eingreifen der Zapfen in die Zapfenausnehmungen zusammengeführt. Danach läßt sich quer zur Schloßebene der Mittelsteg einsetzen. Der meistens als Schwerspannstift ausgebildete Sicherungsstift dient lediglich zum Versperren der beschriebenen Teile, wird also nicht selbst auf Scherung beansprucht.

Die erforderliche Zugfestigkeit liefern bei dem erfindungsgemäßen Kettenschloß die Zapfen und der Mittelsteg, deren Lagerflächen so angeordnet sind, daß sie die Kräfte übertragen können, wenn das Kettenglied in den Rundungen auf Zug beansprucht ist. Bei einem solchen Kettenglied muß man einerseits durch geeignete Formgebungsmaßnahmen dafür sorgen, daß z. B. die bei hochfesten Bergbauketten geforderten Zugkräfte und Lastwechsel ertragen werden, daß aber andererseits der Umlauf des Kettenschlosses um die Kettenscheibe nicht beeinträchtigt ist.

Die Erfindung geht aus von einem vorbekannten Kettenschloß (DE-A 2 813 748). Die Druckschrift zeigt ein Kettenschloß, welches als aufrecht über dem Kettenstern laufendes Kettenglied ausgebildet ist und in der Längendimension der Kettenglieder verstärkte Rundungen aufweist. Da man bei anderen bekannten Kettenschlössern bereits die Erfahrung gemacht hat, daß die übertragbaren Zugkräfte oft nicht ausreichen, weil die sich aufeinander abstützenden Flächen Deformationen zeigen, wenn ein solches Flachschloß längere Zeit in Betrieb gewesen ist. Man hat auch beobachtet, daß häufiger Dauerbrüche auftreten, die von der äußeren Stirnfläche der Zapfen bis zur Rundung der betreffenden Kettengliedhälfte durchlaufen. Deswegen hat man die Aufgabe darin gesehen, das Flachschloß entsprechend zu verstärken und sogar so weit, daß man auch mit Stählen auskommen kann, wie man sie in den Rundgliederketten verwendet. Daraus ergibt sich dann ein Flachschloß, bei dem zwar der den Kettenstahl entsprechend abgerundete Mittelsteg und die Zapfen spiegelsymmetrisch zur mittleren Querebene des aus den Hälften zusammensetzbaren Ringgliedes ausgebildet sind, wobei die Stirnseiten der kurzen Schenkelabschnitte miteinander ausgefluchtet sind. Andererseits muß man die Rundungen so weit verstärken, daß das Kettenglied nur noch stehend, d.h. mit seiner Ebene in der Ebene der Scheibe und nicht mehr quer dazu, also liegend über die Kettenscheibe laufen kann. Diesen Nachteil hat man zwar auf verschiedene Weise beheben wollen. In manchen Fällen des Einsatzes eines solchen Flachschlosses hat man empfohlen, die Kette zu drehen. In anderen Fällen sollten mehrere Flachschlösser mit Rundkettengliedern eingesetzt werden. In der Praxis hat sich jedoch gezeigt, daß diese Beschränkung des vorbekannten Kettenflachschlosses insbesondere im Untertagebetrieb so hinderlich ist, daß man in aller Regel auf seinen betrieblichen Einsatz verzichten muß.

Auch die Bearbeitung der tragenden Flächen im Kettenflachschloß, d.h. die wenigen Flächen, die mit dem Mittelsteg zusammenwirken, wird trotz der Symmetrie nicht wesentlich erleichtert, weil durch die verstärkten Rundbögen des Ringgliedes der Innenraum und der damit zur Bearbeitung zur Verfügung stehende Platz erheblich eingeschränkt ist.

Der Erfindung liegt die Aufgabe zugrunde, einem Kettenschloß der beschriebenen Art, das in flacher und senkrechter Stellung um Kettenscheiben umlaufen kann, eine sowohl vom Standpunkt der betrieblichen Beanspruchungen wie auch für die Bearbeitung günstigere Form zu geben und dessen Festigkeit zu steigern, ohne daß die beschriebene Montageweise geändert zu werden braucht.

Diese Aufgabe wird erfindungsgemäß mit den Merkmalen des Anspruches 1 gelöst. Zweckmäßige Ausführungsformen der Erfindung sind in den Unteransprüchen wiedergegeben.

Erfindungsgemäß werden gegenüber allen vorbekannten Ausführungsformen die Zapfen erheblich schmaler ausgeführt, ohne daß zum Ausgleich entsprechende Materialvermehrungen an den Kettengliedrundungen vorgesehen werden, so daß sich die Materialverminderung in den Zapfen und im Mittelsteg ergibt. Da man aber Fasen vorsieht, können die Kanten nicht mehr deformiert werden und dementsprechend entfällt die hiermit verbundene Bildung von Haarrissen oder ähnlichen Schwächungen, von denen Dauerbrüche ausgehen können. Indem man diese Fasen anschmiedet, erhöht man die statische Festigkeit des Schlosses so weit, daß die Schwächung der Zapfen bei weitem ausgeglichen wird.

Einerseits gewinnt man dadurch den Vorteil einer vereinfachten Bearbeitungsmöglichkeit, insbesondere der tragenden Innenflächen des Ringgliedes, weil man in gleichen Ebenen liegende Flächen bearbeiten kann und genügend Raum im Ringglied für die Bearbeitungswerkzeuge zur Verfügung hat. Andererseits reduzieren sich durch die angeschmiedeten Fasen die insgesamt zu räumenden Materialmengen. Im ganzen benötigt man gegenüber dem Vorbild nicht mehr Werkstoff bei dem neuen Kettenflachschloß. Im Betrieb ergibt sich der Vorteil, daß das neue Kettenflachschloß nicht nur in beiden Ebenen um die Scheibe umläuft, sondern daß auch sein Mittelsteg bei flacher Stellung nicht von den abgewinkelten, benachbarten Rundkettengliedern quer zur Schloßebene beansprucht werden kann. Zu den betrieblichen Vorteilen des neuen Kettenflachschlosses gehört ferner, daß die an den verspringenden Innenflächen des Ringgliedes vorgesehenen Fasen zum Ansetzen eines Meißels verwendet werden können, mit dem sich die Teile voneinander trennen lassen, wenn das Flachschloß längere Zeit in Betrieb gewesen ist.

Die Einzelheiten der Erfindung ergeben sich aus der nachfolgenden Beschreibung einer Ausführungsform anhand der Figuren in der Zeichnung; es zeigen

Fig. 1 ein Kettenflachschloß gemäß der Erfindung in montiertem Zustand und im Längsschnitt,

Fig. 2 eine Draufsicht auf den Gegenstand der Fig. 1,

Fig. 3 eine der beiden deckungsgleichen Hälften des Ringgliedes in einer Ansicht, die der Darstellung der Fig. 1 entspricht,

Figur 4 eine Draufsicht auf den Gegenstand der Figur 3,

Figur 5 in vergrößerter, abgebrochener und in der Figur 3 entsprechender Darstellung das geschmiedete Teil mit einer gesondert wiedergegebenen Einzelheit,

Figur 6 eine Einzelheit in Richtung des Pfeiles VI der Figur 5,

Figur 7 einen Schnitt längs der Linie VII-VII der Figur 5,

Figur 8 einen Schnitt längs der Linie VIII-VIII der Figur 3,

Figur 9 einen Schnitt längs der Linie IX-IX der Figur 3,

Figur 10 einen Schnitt längs der Linie X-X der Figur 3,

Figur 11 einen Schnitt längs der Linie XI-XI der Figur 3,

Figur 12 einen Schnitt längs der Linie XII-XII der Figur 3,

Figur 13 einen Schnitt längs der Linie XIII-XIII der Figur 3,

Figur 14 den Mittelsteg in einer Ansicht entsprechend der Darstellung der Figur 1,

Figur 15 einen Schnitt längs der Linie XV-XV der Figur 14 und

Figur 16 eine Stirnansicht des Mittelsteges nach Figur 14.

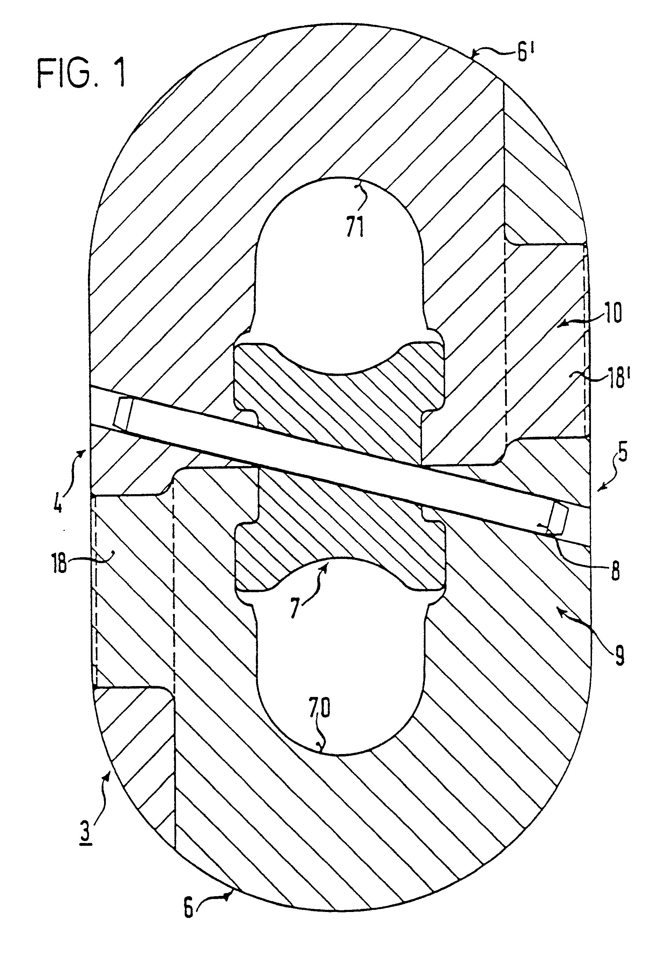

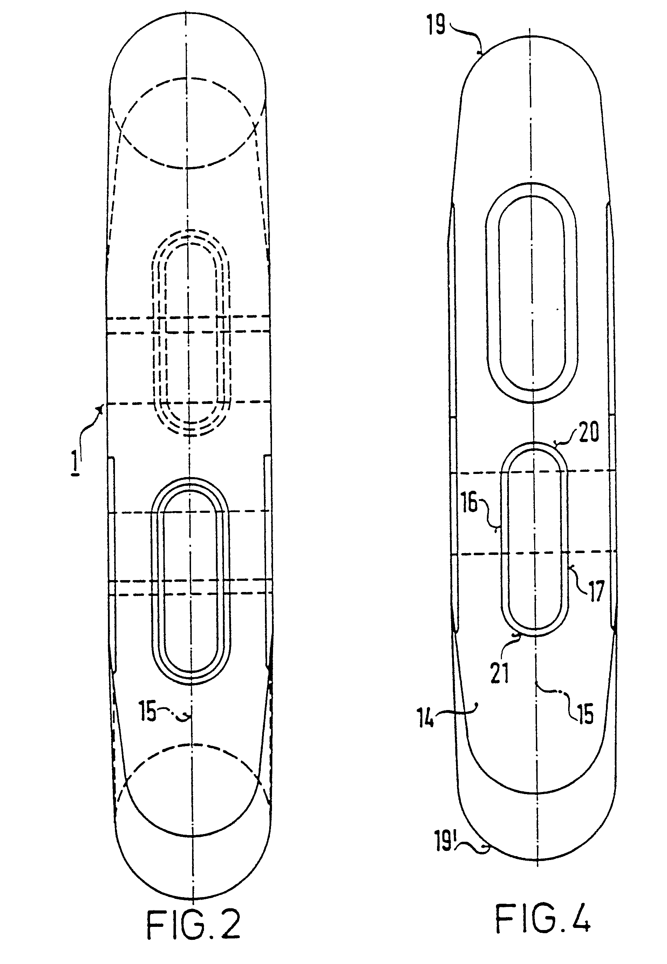

Das allgemein mit 1 in Figur 2 bezeichnete Kettenflachschloß hat ein aus Figur 1 ersichtliches Ringglied 3. An dem Ringglied 3 lassen sich die parallelen Schenkel 4, 5 und die daran anschließenden Rundbögen 6, 6' unterscheiden. Das Ringglied 3 wirkt mit einem Mittelsteg 7 zusammen. Das Ringglied 3 und der Mittelsteg 7 werden mit einem Sicherungsstift 8 zusammengehalten, der die miteinander zu versperrenden Teile zusammenhält, aber selbst nicht beansprucht wird.

Das Ringglied 3 ist aus zwei deckungsgleichen Hälften 9 bzw. 10 zusammengesetzt, welche in Figur 1 aus der unterschiedlichen Schraffur zu erkennen sind. Infolge der Deckungsgleichheit genügt es, eine dieser Häften näher zu erläutern.

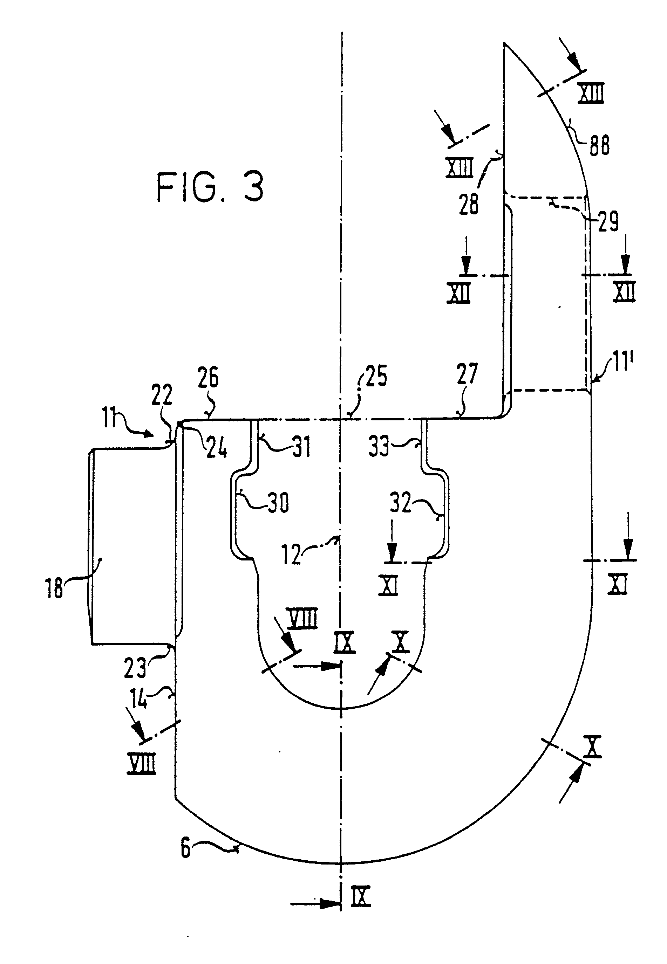

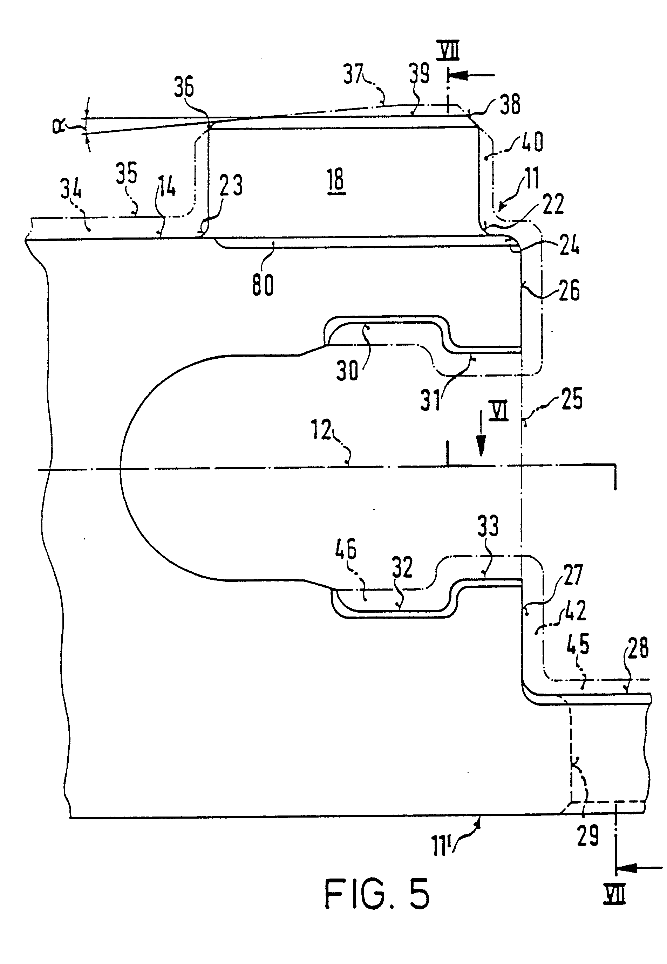

Nach der Darstellung in den Figuren 3 und 5 hat jede dieser Hälften einen der Rundbögen 6 sowie einen langen Schenkel 11' und einen kurzen Schenkel 11. Der kurze Schenkel hat eine parallel zur Längsmittelebene 12 verlaufende Außenfläche 14 mit einem senkrecht dazu verlaufenden Zapfen 18. Der Zapfen hat parallel zur Shloßebene 15 verlaufende ebene Begrenzungsflächen 16 bzw. 17 und entsprechend den Rundungen 19 bzw. 19' der Bögen 6, 6' gekrümmte Stirnflächen 20, 21. Der Zapfen 18 hat ferner nach vorgegebenen Radien bei 22 und 23 gekrümmte Übergänge in die Fläche 14. Die Fläche 14 geht ihrerseits mit einem vorgegebenen Radius 24 in eine in der mittleren Querebene 25 des Kettengliedes liegende Stirnfläche 26 über. Mit ihr ist die Stirnfläche 27 ausgefluchtet, an der eine innere Fläche 28 ansetzt, die ihrerseits parallel zur Mittelebene 12 verläuft und am längeren Schenkel 11' angeordnet ist. Diese Fläche wird von einer Zapfenausnehmung 29 unterbrochen, in die der Zapfen 18' der anderen Gliedhälfte 10 paßt.

Der kurze Schenkel 11 trägt innen je eine von zwei in der Schloßebene vorspringende Flächen 30, 31, die ihrerseits parallel zur Mittelebene 12 verlaufen. Ihnen gegenüber liegen die Flächen 32, 33, die ebenfalls vorspringen und im langen Schenkel 11' angeordnet sind. Während die Figur 3 das fertig bearbeitete Stück zeigt, ist in den Fignr 5 bis 7 das geschmiedete Stück wiedergegeben.

Wie sich aus der Figur 5 ergibt, wird die spätere Fläche 14 mit einem Überstand 34 geschmiedet, dessen Außenfläche 35 parallel zur Fläche 14 verläuft. Die Fläche 35 läuft auch entsprechend dem späteren Zapfen 18, endet jedoch an einer angeschmiedeten Fase 36, welche den Übergang in die angeschmiedete Stirnfläche 37 des Zapfens 18 bildet. Die Fläche 37 endet an einer angeschmiedeten Fase 38 und verläuft in Richtung auf den Bogen 6 in einem Winkel α zur späteren bearbeiteten Stirnfläche 39 des Zapfens 18. Die Fase 38 endet an einer angeschmiedeten Fläche 40, welche sich über die späteren Flächen 22, 26, 31 und 30 erstreckt. Auch über die Flächen 32, 33 sowie 27 und 28 erstreckt sich ein geschmiedeter Überstand 42, der später durch Bearbeitung entfernt wird.

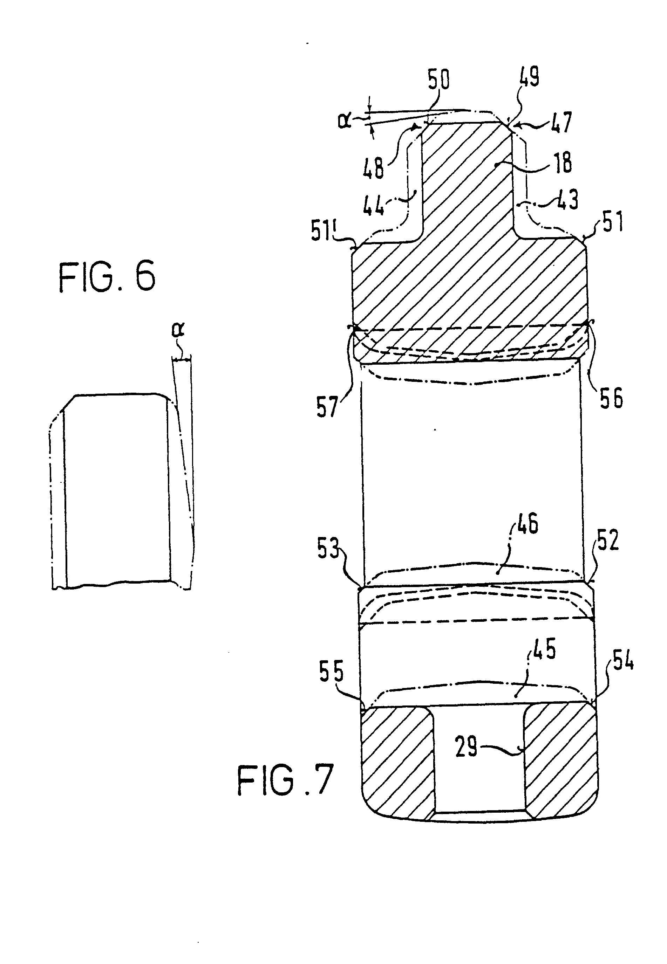

Wie insbesondere die Darstellung der Figur 7 erkennen läßt, ist das Schmiedeteil seinerseits mit Überständen 43, 44 im Bereich der Außenseite des kurzen Schenkels 11 und mit Überständen 45 bzw. 46 im Bereich des langen Schenkels 11′ versehen. Angeschmiedet sind dabei die Fasen 47, 48 im Bereich der Abschrägungen der Längskanten 49, 50 der Zapfenstirnfläche, die Fasen 51, 51′ im Bereich der späteren Abschrägungen der Längskanten der Fläche 14, die Fasen 52, 53 im Bereich der späteren Abschrägungen der Längskanten der Flächen 31 und 33 sowie die Fasen 54 und 55 im Bereich der späteren Abschräggungen der Längskanten der Fläche 28 des längeren Schenkels 11′ und die Fasen 56 und 57 im Bereich der späteren Abschrägungen der Längskanten der Flächen 30 und 31.

Wie sich hieraus ergibt, kann sich hieraus die Bearbeitung des Schmiedeteiles nach den Figuren 5 bis 7 darauf beschränken, in verschiedenen Arbeitsgängen durch Räumen oder Fräsen die schaffriert wiedergegebenen Teile der Überstände zu entfernen, so daß die Schrägflächen der verschiedenen Phasen stehen bleiben. Der Winkel $\alpha = 5°$ ist als Schmiedeschräge überall gleich, so daß jede Hälfte liegend in einem Gesenk geschlagen werden kann. Die hierdurch erreichte Ausrichtung der Fasern bleibt erhalten, weil die verschiedenen Schrägflächen der fertig bearbeiteten Kanten unbeeinflußt bleiben.

Im übrigen ist die Teilung auf folgende Weise durchgeführt:

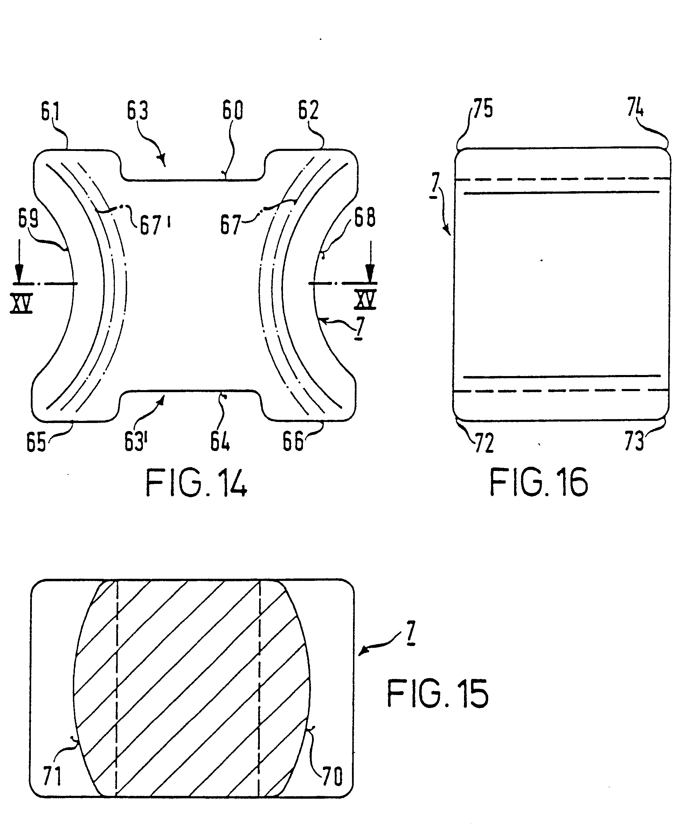

Spiegelsymmetrisch zur mittleren Querebene 25 (Figuren 3 und 5) sind die Zapfen 18 angeordnet, während die Flächen 26 und 27 in der Querebene 25 ausgefluchtet sind. Spiegelsymmetrisch zur Querebene 25 (Figuren 14 bis 16) ist aber auch der Mittelsteg 7 ausgebildet. Er hat eine einspringende Fläche 60, die mit den beiden Flächen 31 zur Anlage gebracht werden kann. Der Mittelsteg weist ferner je eins vorspringende Fläche 61 bzw. 62 auf, welche zur Anlage mit den Flächen 30 und 32 jeder der beiden Hälften gebracht werden kann. Die an der Stirnseite 63 angeordneten Flächen 60-62 entsprechen den Flächen 64-66 an der Stirnseite 63′ des Mittelsteges 7.

Der Faserverlauf des Mittelsteges ist strichpunktiert mit gekrümmten Linien bei 67 und 67′ wiedergegeben. Ihre Krümmung entspricht der Krümmung der Sattellinien 68 bzw. 69, die ihrerseits entsprechend den Innenkrümmungen 70, 71 der Bögen 6, 6′ verlaufen (Figur 1).

Wie man aus der Figur 15 erkennt, sind die Sättel 70, 71 des Mittelsteges 7 ihrerseits gleichförmig gekrümmt, so daß bei eingehängten Rundgliederketten eine allseitige Beweglichkeit der Rundkettenglieder gewährleistet ist. Im Gegensatz zu den Kettengliedhälften sind die Kanten 72, 73, 74, 75 der Flächen an den Stirnseiten 63, 63′ abgerundet und nicht abgefrast.

Die Bearbeitung der Schmiedeteile, wie sie insbesondere aus den Figuren 5 bis 7 hervorgehen, erfolgt im allgemeinen durch Räumen. Die angeschmiedeten Schrägflächen, welche bei der Bearbeitung der Fasen 51 und 51′ stehen bleiben, sind in Figur 5 mit 80 bezeichnet und dienen bei zusammengesetztem Schloß zum Einsetzen eines Meißels, der das Trennen der montierten Schloßhälften erleichtert, wenn das Flachschloß längere Zeit in Betrieb gewesen ist.

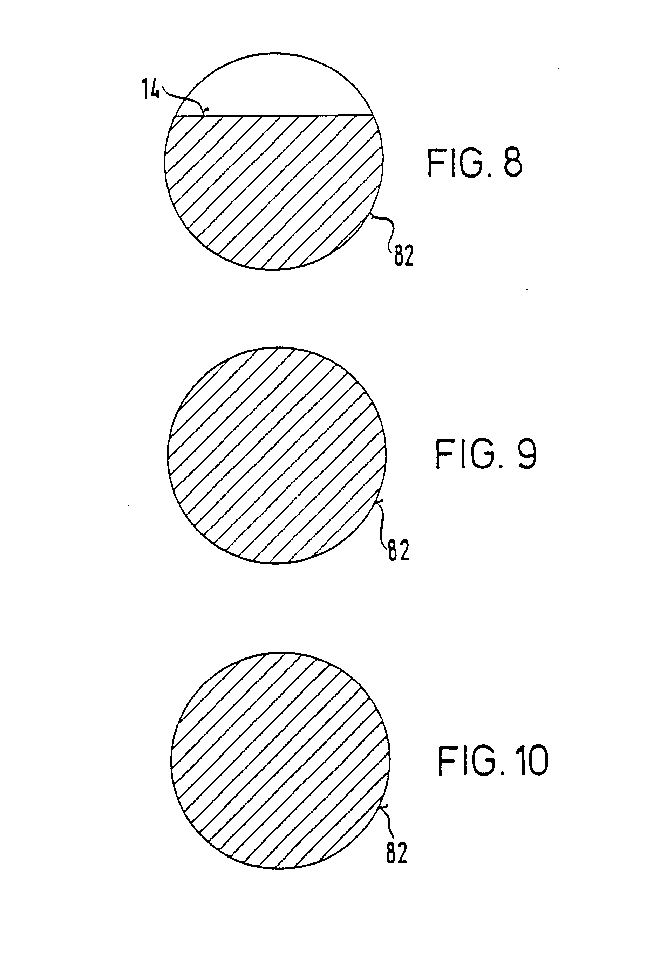

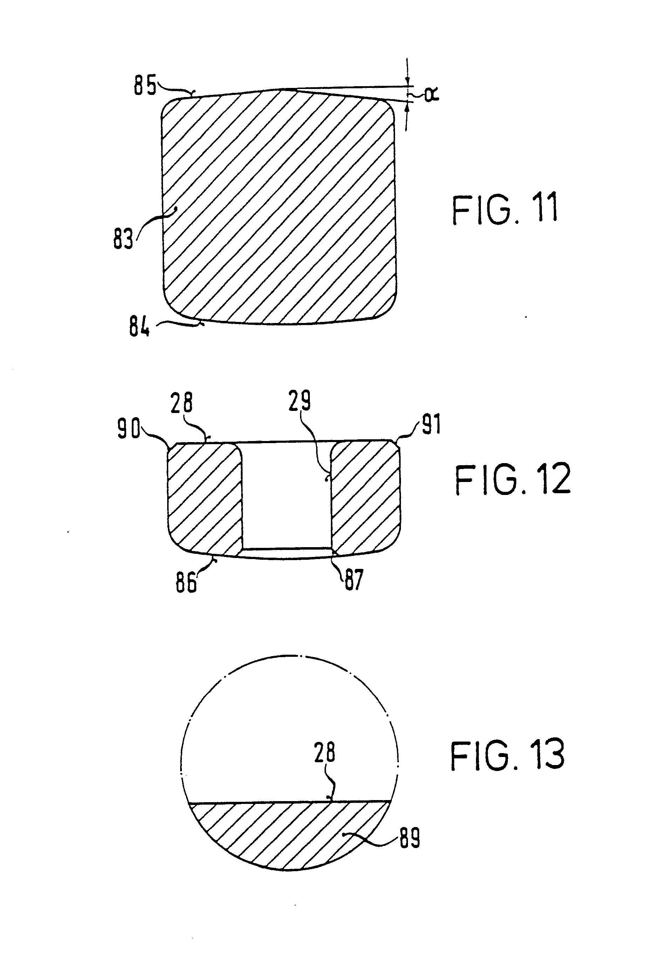

Wie die Schnittdarstellungen der Figuren 8 bis 11 erkennen lassen, wird in der Kettengliedrundung 5 abgesehen von der Bearbeitung der Fläche 14 in dem durch den kurzen Schenkel 11 verlaufenden Schnitt VIII-VIII der übrige Teil des Schlosses nicht bearbeitet. Dementsprechend entsteht eine kreisförmige Umrißlinie 82, die der des Kettenstahles entspricht. Diese kreisförmige Umrißlinie 82 bleibt auch in den durch die Schnitte nach den Figuren 9 und 10 gekennzeichneten Bereichen der Rundung 5 erhalten. Aus der Darstellung der Figur 11 wird ersichtlich, daß die entsprechend im Kettenstahl gerundeten Teile in den polygonalen Querschnitt 83 übergehen, welcher eine gerundete Außenfläche 84 und eine dachförmige Umrißlinie 85 besitzt, deren Neigung dem Winkel $\alpha = 5°$ entspricht, welcher das Entformen des Schmiedeteiles gestattet.

Der durch die Zapfenausnehmung 29 geführte Schnitt läßt die Innenfläche 28 des längeren Schenkels erkennen und zeigt, daß die ihr entsprechende Außenfläche 86 etwa der Umrißlinie 84 entspricht und daher ebenfalls leicht konvex gekrümmt ist. Die außen liegende Fase 87 ist nicht angeschmiedet, sondern Ergebnis eines entsprechenden Bearbeitungsvorganges, der z. B. in einem Aufbohren bestehen kann. Die Figur 13 zeigt, daß die Krümmungen 84 und 86 sich auch bei 89 in das Ende des längeren Schenkels fortsetzen, wobei die Fläche 28 infolge ihrer parallelen Anordnung zur Längsmittelebene 12 und durch die hinter der Zapfenausnehmung 29 ansetzende Außenrundung 88 (Figur 3) des Flachschlosses den Querschnitt 89 bestimmen.

Die in der Darstellung der Figur 12 ersichtlichen beiden Fasen 90 und 91 wirken mit den Fasen 51 und 51′ zusammen, d.h. sie bilden eine keilförmige Vertiefung, in die sich ein Meißel einsetzen läßt. Die Fasen 90 und 91 sind gemäß der dargestellten Ausführungsform unter 45° ebenso wie die Fasen 47, 48; 51, 51′, 52, 53 und 54, 55 geneigt.

Das Flachschloß läßt sich wie folgt zusammensetzen:

Sollen zwei Kettenstränge miteinander verbunden werden, so hängt man je eine Hälfte 9, 10 des Ringgliedes 3 mit seiner Rundung in die Außenrundungen der Endglieder der Kettenstränge ein. Durch Bewegen der beiden Hälften 9, 10 in der Ebene des Schlosses werden die Zapfen 18 in die ihnen zugeordneten Zapfenausnehmungen 29 verbracht. Quer zur Schloßebene läßt sich dann der Mittelsteg 7 einschieben. Wenn die beschriebenen Teile ihre vorschriftsmäßige Lage zueinander einnehmen, fluchten die in ihnen angebrachten Aussparungen für den Sicherungsstift 8, der sich demzufolge als letztes Teil einbringen läßt, wodurch die Teile miteinander versperrt werden.

**Patentansprüche**

1. Kettenflachschloß (1) für Rundgliederketten, das ein aus parallelen Schenkeln (4, 5) und Rundbögen (6, 6') bestehendes Ringglied (3), einen die Ringgliedschenkel (4, 5) verbindenden Mittelsteg (7), sowie einen seine Einzelteile durchdringenden Sicherungsstift (8) aufweist, wobei das Ringglied (3) in deckungsgleiche Hälften (9, 10) unterteilt ist, die jeweils einen seiner Rundbögen (6, 6'), einen kurzen, mit einem Zapfen (18) versehenen Schenkelabschnitt (11) und einen mit einer Zapfenausnehmung (29) versehenen weiteren langen Schenkelabschnitt (11') aufweisen und der Mittelsteg (7) und die Schenkel (4, 5) des Ringgliedes (3) mit verspringenden Sperrflächen (30 bis 33; 60 bis 66) versehen sind und der dem Kettenstahl entsprechende abgerundete Mittelsteg (7) und die Zapfen (18) spiegelsymmetrisch zur mittleren Querebene (25) des Ringgliedes (3) ausgebildet sind, in der die Stirnseiten (26, 27) den kürzeren Schenkelabschnitte ausgefluchtet sind,
dadurch gekennzeichnet,
daß mindestens die im Bereich der Zapfen (18) angeordneten inneren Lagerflächen (30, 31, 32, 33) für den Mittelsteg (7), sowie die Zapfenstirnflächen (39) Außenkanten mit geschmiedeten Fasen (47, 48, 52, 53, 56, 57) aufweisen.

2. Kettenflachschloß nach Anspruch 1,
dadurch gekennzeichnet,
daß im Bereich der Zapfen (18) die Außenlagerfläche (14) des kurzen Schenkels (11) und im Bereich der Zapfenausnehmung (29) die innere Lagerfläche (28) des langen Schenkels (11') Außenkanten mit geschmiedeten Fasen (51, 51', 54, 55) zum Einsetzen eines Demontagewerkzeuges aufweisen.

3. Kettenflachschloß nach einem der Ansprüche 1 oder 2,
dadurch gekennzeichnet,
daß die Zapfenstirnfläche (37) des geschmiedeten Rohlings in Richtung auf den Kettengliedbogen (6, 6') einfällt und einen Winkel mit der Zapfenstirnfläche (39) des Fertigteiles einschließt, die parallel zur Außenfläche (14) des kurzen Schenkels (11) verläuft.

4. Kettenflachschloß nach einem der Ansprüche 1 bis 3,
dadurch gekennzeichnet,
daß der Einfallswinkel der Zapfenstirnfläche (37) des Rohlings dem Entformungswinkel des Schmiedegesenks entspricht.

**Claims**

1. A flat chain-fastener (1) for round-link chains, which comprises an annular link (3) consisting of parallel sidepieces (4,5) and round bends (6, 6'), a central crosspiece (7) joining the sidepieces (4, 5) of the annular link, and a securing peg (8) passing through its individual parts, with the annular link (3) divided into halves (9, 10) of equal extent each of which has a respective round bend (6, 6'), a short sidepiece section (11) fitted with a lug (18), and a further long sidepiece section (11') provided with a recess (29) for a lug, and the central crosspiece (7) and the sidepieces (4, 5) of the annular link (3) being provided with projecting locking surfaces (30 to 33; 60 to 66), and the rounded central crosspiece (7) matching the chain steel, and the lugs (18), are configured in mirror symmetry relative to the central transverse plane (25) of the annular link (3), in which the faces (26, 27) of the shorter sidepiece sections are aligned, characterised in that at least the inner bearing surfaces (30, 31, 32, 33) for the central crosspiece (7) which are provided in the area of the lugs (18), as well as the lug faces (39), exhibit outer edges with forged bevel-edges (47, 48, 52, 53, 56, 57).

2. A flat chain-fastener according to claim 1, characterised in that in the area of the lugs (18) the outer bearing surface (14) of the short sidepiece (11) and in the area of the lug recess (29) the inner bearing surface (28) of the long sidepiece (11') have outer edges with forged bevel-edges (51, 51', 54, 55) for the insertion of a dismantling tool.

3. A flat chain-fastener according to claim 1 or 2, characterised in that the lug face (37) of the forged unfinished piece is inclined inwardly in the direction of the chain link bend (6, 6') and forms an angle with the lug face (39) of the finished piece which is parallel to the outer face (14) of the short sidepiece (11).

4. A flat chain-fastener according to any one of claims 1 to 3, characterised in that the angle at which the lug face (37) of the unfinished piece is inclined corresponds to the mold release angle of the drop-forge die.

**Revendications**

1. Maillon de fermeture plat (1) pour chaîne à maillons ronds, constitué par un élément annulaire (3) comprenant des branches parallèles (4, 5) et des parties courbes (6, 6'), une pièce centrale (7) reliant les branches (4, 5) de l'élément annulaire, ainsi qu'une goupille de fixation (8) traversant ses éléments individuels, l'élement annulaire (3) étant subdivisé en moitiés égales (9, 10) gui comprennent chacune une section de branche courte (11) munie d'un bossage (16) et une autre section de branche longue (11') munie d'un évidement à bossage (29), la pièce centrale (7) et les branches (4, 5) de l'élément annulaire (3) étant munies de surfaces de fermeture décalées (30 à 33; 60 à 66), et la pièce centrale (7) qui est arrondie conformément à l'acier à chaîne et les bossages (18) sont constitués de façon symétrique par rapport au plan central transversal (25) de l'élément annulaire (3), dont les côtés frontaux (26, 27) des sections de branche courtes sont en alignement, caractérisé en ce qu'au moins les surfaces d'appui internes (30, 31, 32, 33) disposées dans la région des bossages (18) et destinées à la pièce centrale (7) ainsi que les surfaces frontales (39) des bossages présentent des arêtes externes à parties biseautées forgées (47, 46, 52, 53, 56, 57).

2. Maillon de fermeture plat selon la revendication 1, caractérisé en ce que la surface d'appui extérieure (14) de la branche courte (11) dans la région du bossage (18) et la surface d'appui interne (26) de la branche longue (11') dans la région de l'évidement à bossage (29) présentent des arêtes externes à parties biseautées forgées (51, 51', 54, 55) en vue de l'introduction d'un outil de démontage.

3. Maillon de fermeture plat selon l'une quelconque des revendications 1 ou 2, caractérisé en ce que la surface frontale (37) du bossage de l'ébauche forgée est en pente en direction de la partie courbe (6, 6') du maillon et forme un angle avec la surface frontale (39) du bossage de la pièce terminée qui est parallèle à la surface extérieure (14) de la branche courte (11).

4. Maillon de fermeture plat selon l'une quelconque des revendications 1 à 3, caractérisé en ce que l'angle de pente de la surface frontale (37) du bossage de l'ébauche correspond à l'angle de retrait de la matrice de forgeage.

FIG. 1

FIG.2

FIG.4

# FIG. 3

FIG. 5

FIG. 6

FIG .7

14

FIG. 8

82

FIG. 9

82

FIG. 10

82

FIG. 11

FIG. 12

FIG. 13

FIG.14

FIG.16

FIG.15